# EUROPEAN PATENT SPECIFICATION

(11) **EP 3 040 927 B1**
(45) Date of publication and mention of the grant of the patent: **17.02.2021**
(21) Application number: 15202922.9
(22) Date of filing: 29.12.2015
(51) Int. Cl.: G06F 21/62, G06N 5/04, G06Q 30/02

(54) **SYSTEM FOR GENERATING FABRICATED PATTERN DATA RECORDS**
SYSTEM ZUR ERZEUGUNG FABRIZIERTER MUSTERDATENSÄTZE
SYSTÈME POUR GÉNÉRER DES ENREGISTREMENTS DE DONNÉES DE MOTIF FABRIQUÉ

(30) Priority: 01.01.2015 IL 23655715
(43) Date of publication of application: 06.07.2016
(73) Proprietor: Deutsche Telekom AG, 53113 Bonn (DE)
(72) Inventor: CHIZI, Barak, Ashkelon (IL); SHAPIRA, Bracha, Beer Sheva (IL); ROKACH, Lior, Omer (IL); MIMRAN, Dudu, Tel Aviv (IL); BAR, Ariel, Ashdod (IL); ZEIDLER, Stefan, 13467 Berlin (DE); REDERER, Andreas, 12249 Berlin (IL)
(74) Representative: Lampis, Marco

(56) References cited:
- US-A1- 2011 035 347
- Los Angeles: "University of California Scalable, Synthetic, Sensor Network Data Generation", , 31 December 2005 (2005-12-31), XP055270029, Retrieved from the Internet: URL:http://citeseerx.ist.psu.edu/viewdoc/d ownload?doi=10.1.1.111.6699&rep=rep1&type= pdf [retrieved on 2016-05-02]

## Description

### Field of the Invention

The invention is in the field of communication platforms. More specifically, the invention relates to a system for generating fabricated pattern data records.

### Background of the Invention

In the modern world, the use of communication networks is almost inevitable, whether if it is cellular communication or computers communication or any other communication platforms. The communication companies have therefore, records about every user. From these records a lot of information can be derived; however, using real data of any communication network has always caused a serious privacy problem. General speaking, the main problem is connected by the need for protecting the users from unsupervised monitoring. Nevertheless, the need of knowing the nature of data can yield significant value for many applications (marketing, sales, and customer service).

Other systems are also capable of collecting various types of user data or all sorts of data. These systems may include social web sites, search engines and wearable computing. This huge amount of collected data may be used for all sorts of analysis. Commercial data may also be beneficial for such analysis. However, privacy and security must be kept while using this data.

US 2011/0035347 discloses a system for predicting properties of external nodes based on properties of internal nodes. In one or more data structures are stored a first data set regarding external nodes and a second data set regarding nodes with known properties in a selected group, the second data set including one or more types of data items not included in the first data set. The second data set identifies from the second data one or more modeled events or attributes of internal nodes in the selected group that are statistically likely to identify the nodes or their relations, based on the identified modeled events or attributes and events or attributes in the first data set.

It is therefore an object of the present invention to provide a system for generating fabricated pattern data records, based on modeling of actual networks of various types.

It is another object of the present invention to provide a system for generating fabricated pattern data records, which keeps the users' privacy and the security of the collected data.

Further purposes and advantages of this invention will appear as the description proceeds.

### Summary of the Invention

The invention is set out in the appended claims.

The present invention is directed to a system for generating fabricated pattern data records (XDRs) based on data from accessible data sources, comprising:
a) a plurality of XDR agents being software components adapted to collect data from data sources; and
b) an XDR core module run by a server containing:
   - one or more modeling and pattern creation modules each of which including algorithms for modeling the data collected by said plurality of XDR agents and for creating patterns accordingly;
   - one or more synthetic data generation modules each of which including algorithms for generating fabricated data, based on the patterns created by the modeling and pattern creation modules;
   - a data splitting module for splitting the collected data into training and testing sets according to a predetermined policy;
   - an XDR storage database for storing created patterns and fabricated data; and
   - a configuration manager for controlling the operation of the modeling and pattern creation modules and of the synthetic data generation modules; and
c) a data-store communication module for mediating between said XDR agents and said XDR core modules by using data transformation,
wherein said XDRs are based on various types of records of real context-related data accessed from a corresponding data source,
wherein each of said plurality of XDR agents is implemented to identify a data structure of said real data which is accessible from the corresponding data source, collect said real data from a specific one of said accessible data sources and to transform the data structure of said collected data in combination with said data-store communication module into a unified input structure that is compatible with the algorithms used by the one or more modeling and pattern creation modules.

The modeling and pattern creation modules may use Model and Patterns Creation algorithms (MPCs), which can discover patterns that reflect relationships, conditions and constants of available data.

The modeling tasks may include:
- state-transitions learning of a system or an individual;
- learning probabilistic cause-effect conditions among a given set of random variables; and
- context-aware learning.

The synthetic data generation modules may use Syntactic Data Production (SDP) algorithms to generate new and fabricated data samples utilizing the models learned by the MPCs.

The system may further comprise an XDR query engine for receiving data queries, processing the queries, and returning said processed queries to a client, wherein said XDR query engine comprises a Query API and a Query Processer to receive and process data-generation queries. The system may further comprise as well an agent for converting and aggregating tasks performed on the fabricated data to comply with said queries, or a query cache for caching queries and query results. Processed data queries may be aggregated and prepared for further usage.

The system may further comprise a User Interface for allowing interaction with the XDR core module and server-side components. The data sources may be located locally on a computerized device that runs the data fabrication system, or on an external computerized device.

The data splitting module may split the data into training and testing sets by using random based or time based splitting.

The XDRs are based on various types of real context-related data records selected from the group of Call Data Record (CDR), data regarding operations performed by a user, purchasing records of users at points of sale, traveling records, data related to social web sites, data related to search engines and data related to wearable computing.

All the above and other characteristics and advantages of the invention will be further understood through the following illustrative and non-limitative description of embodiments thereof, with reference to the appended drawings. In the drawings the same numerals are sometimes used to indicate the same elements in different drawings.

### Brief Description of the Drawings

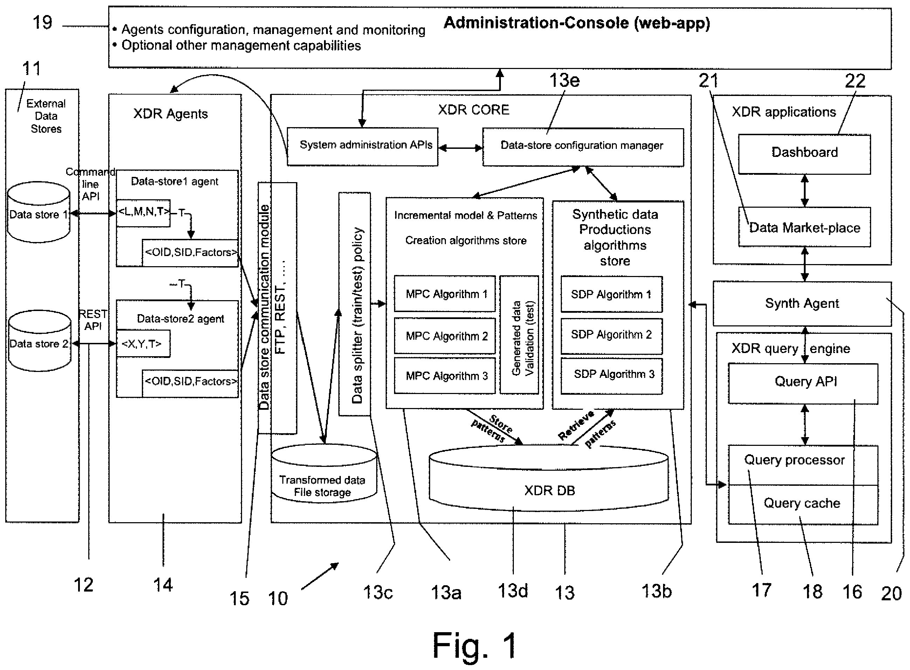

- Fig. 1 schematically illustrates the logical components of the proposed system.

### Detailed Description of Embodiments of the Invention

The present invention relates to a system which is capable of fabricating synthetic data (hereinafter called X Data Records or XDRs) from any available data source, while providing a high degree of similarity between the original data and the synthetic data. An XDR may be any type of data record, such as Call Data Record (CDR), data regarding operations performed by a user, purchasing records of users at points of sale, traveling records etc.

Fig. 1 schematically illustrates the main logical components of a system for generating fabricated pattern data records of telecommunication platforms, as proposed by the present invention. The system 10 is capable of connecting to any available (external) data source 11 via the available API 12 of that data source. The external data source is the target data source from which it is required to fabricate data. These data sources can be located locally on the computerized device that runs the data fabrication system, or on an external computerized device.

System 10 includes an XDR core module 13, which is the main component and contains the following sub-components:
- modeling and pattern creation modules 13a, including algorithms for modeling of the received original data;
- synthetic data generation modules 13b, including algorithms for generating fabricated data, based on the patterns created by the modeling and pattern creation modules 13a;
- a data splitting module 13c including algorithms for splitting the data into training and testing sets according to a certain predetermined policy (i.e., a random based split, or a time based split);
- an XDR storage database 13d for storing created patterns and fabricated data;
- a configuration manager 13e for controlling the operation of the modeling and pattern creation modules 13a and of the synthetic data generation modules 13b.

System 10 also includes XDR agents 14, which are software components that communicate with the data sources and access the relevant data. Each XDR agent 14 knows the unique APIs of each data-store, as well as the data-structures. It also knows how to transform these data structures into a unified input structure that is compatible with the algorithms used by the XDR core module 13. A specific XDR agent 14 must be implemented for each target data source 11.

A data-store communication module 15 is responsible for mediating between the XDR agents 14 and the XDR core module 13 by using a flexible method of transforming data from the XDR agents 14 into the XDR storage database 13d.

Splitting the data by the data splitting module 13c is required in order to evaluate the generated models in the next section. Models are trained solely on the training set, while the testing set is utilized to evaluate the generated models using maximum likelihood estimation. The data splitting module 13c is controlled by the splitting criteria (i.e., random-based or time-based) and the splitting ratio (typically a ratio of 90:10).

The Model and Patterns Creation (MPC) are sets of algorithms (used by the modeling and pattern creation modules 13a) which are capable of discovering patterns that reflect the relationships, conditions and constants of the available data. He modeling tasks may be context-aware learning, learning of state-transitions of a system or an individual, or learning probabilistic cause-effect conditions among a given set of random variables. All the learning models have the capability of updating the generated models incrementally, using batch updates.

Examples for data modeling tasks can be:
Modeling the trajectory sequences of individuals (the states of which can be spatial coordinates, cell towers, points of interest, etc.).
Modeling a song playlist (the states can be the genre of the song: pop, dance, rock, etc.).
Modeling the sequence of file system operations (states are sets of commands like "open", "read", "write", "delete", etc.).

Examples for learning cause effect between ransom variables can be:
Users profile records which may contain: age, gender, education, income, relationship-status, etc.
Call center records which may contain: call length, topic, product category, customer-age, customer-credit-level, and call-sentiment.
Medical/diagnostic records: test1 results, test2 results, blood pressure, is Smoking Indicator and a final diagnostic.

### Data Market place

The purpose of the Data Market Place 21 is to provide a platform for creating, offering and obtaining synthetic data. It is targeted at Business Partners and interested instances in general. Users can request synthetic data samples in different volumes from multiple domains according to specific queries. Synthetic records can be marked as public or private for certain users groups.

### Dashboard

The dashboard 22 is graphic user interface component, which expose the functionality of the Data market both for admin users and clients.

The Syntactic Data Production (SDP) algorithms (used by synthetic data generation modules 13b) are used to generate new and fabricated data samples utilizing the models learned by the MPCs. The syntactic data production algorithm store is required to support several types of algorithms, since each of the pattern creation models may have a unique model representation.

A Query API 16 and a Query Processer 17 receive data-generation queries, processes them, requests the generation from the XDR server (which runs the XDR core module 13), aggregates the data if needed, and finally returns it to the client. The query cache 18 allows queries and query results to be cached in order to accelerate response times.

The queried data can also be re formatted, filtered and processed beyond the query agent via the Synth Agent 20 (in a sense the Synth Agent on the output end is analogous to the XDR Agent on the input end), which is adapted to convert and aggregate tasks that are performed on the fabricated data. For example, it can calculate the estimated number of users on a specific cell-tower at a given time-stamp according the fabricated data of user transitions, which has been modeled by the system.

The XDR administration console 19 is a User Interface (such as a GUI) that enables interaction with the XDR core module 13 and other server-side components.

Although embodiments of the invention have been described by way of illustration, it will be understood that the invention may be carried out with many variations, modifications, and adaptations, without exceeding the scope of the claims.

## Claims

1. A system (10) for generating fabricated pattern data records, hereinafter also called X Data Records or XDRs, based on data from accessible data sources (11), comprising:
a) a plurality of XDR agents (14) being software components adapted to collect the data from the data sources (11), wherein a specific XDR agent (14) is implemented for each data source of said data sources (11) ; and
b) an XDR core module (13) run by a server containing:
- one or more modeling and pattern creation modules (13a) each of which including algorithms for modeling the data collected by said plurality of XDR agents and for creating patterns accordingly;
- one or more synthetic data generation modules (13b) each of which including algorithms for generating the fabricated pattern data records, or XDRs, based on the patterns created by said modeling and pattern creation modules;
- a data splitting module (13c) for splitting the collected data into training and testing sets according to a predetermined policy;
- an XDR storage database (13d) for storing the created patterns and the fabricated pattern data records, or XDRs; and
- a configuration manager (13e) for controlling the operation of said modeling and pattern creation modules and of said synthetic data generation modules, wherein said XDRs are based on various types of records of real data accessed from a corresponding data source (11), said system further comprising:
c) a data-store communication module (15) for mediating between said XDR agents (14) and said XDR core module (13) by using data transformation,
wherein each of said plurality of XDR agents (14) is implemented to identify a data structure of said real data which is accessible from the corresponding data source (11), collect said real data from a specific one of said accessible data sources and to transform the data structure of said collected data in combination with said data-store communication module (15) into a unified input structure that is compatible with the algorithms used by the one or more modeling and pattern creation modules (13a).

2. A system according to claim 1, in which the modeling and pattern creation modules (13a) use Model and Patterns Creation algorithms (MPCs) being capable of discovering patterns that reflect relationships, conditions and constants of available data.

3. A system according to claim 2, in which modeling tasks include:
- state-transitions learning of a system or an individual;
- learning probabilistic cause-effect conditions among a given set of random variables; and
- context-aware learning.

4. A system according to claim 2, in which the synthetic data generation modules (13b) use Syntactic Data Production (SDP) algorithms to generate the XDRs as new and fabricated data samples utilizing the models learned by the MPCs.

5. A system according to claim 1, further comprising an XDR query engine for receiving data generation queries, processing the queries, and returning said processed queries to a client, said XDR query engine comprising:
i. a Query API (16); and
ii. a Query Processer (17) to receive and process data-generation queries.

6. A system according to claim 5, further comprising an agent (20) for converting and aggregating tasks performed on the fabricated pattern data records to comply with said queries.

7. A system according to claim 5, further comprising a query cache (18) for caching queries and query results.

8. A system according to claim 1, further comprising a User Interface (19) for allowing interaction with the XDR core module (13) and server-side components.

9. A system according to claim 1, in which the data sources (11) are located locally on a computerized device that runs the data fabrication system (10), or on an external computerized device.

10. A system according to claim 1, in which the data splitting module (13c) splits the data into training and testing sets by using random based or time based splitting.

11. A system according to claim 1, in which the XDRs are based on various types of real context-related data records selected from the group of Call Data Record (CDR), data regarding operations performed by a user, purchasing records of users at points of sale, traveling records, data related to social web sites, data related to search engines and data related to wearable computing.

12. A system according to claim 5, in which the processed data queries are aggregated and prepared for further usage.

## Patentansprüche

1. System (10) zur Erzeugung von Datensätzen mit erzeugter Struktur, nachstehend auch als X-Datensätze oder XDRs bezeichnet, basierend auf Daten von zugänglichen Datenquellen (11), welches umfasst:
a) mehrere XDR-Agenten (14), welche Software-Komponenten darstellen, die angepasst sind, die Daten von den Datenquellen (11) zu erheben, worin ein bestimmter XDR-Agent (14) für jede Datenquelle der Datenquellen (11) eingesetzt wird; und
b) ein XDR-Kernmodul (13), das von einem Server betrieben wird und enthält:
- ein oder mehrere modellierende und Struktur-erstellende Module (13a), von denen jede Algorithmen zum Modellieren der Daten, die von den mehreren XDR-Agenten erhoben wurden, und zum entsprechenden Erzeugen von Strukturen aufweist;
- ein oder mehrere synthetische Daten-Erzeugungs Module (13b), von denen jede Algorithmen zur Erzeugung der Datensätze mit erzeugter Struktur, oder XDRs, basierend auf der durch die Modellierungs- und Struktur-Erzeugungs-Module erzeugte Struktur aufweist;
- ein Datenaufteilungs-Modul (13c) zum Aufteilen der erhobenen Daten in einen Trainings- und Test-Satz gemäß einer bestimmten Richtlinie;
- eine XDR Speicher-Datenbank (13d) zum Speichern der erzeugten Strukturen und der Datensätze mit erzeugter Struktur, oder XDRs; und
- einen Konfigurations-Manager (13e) zum Steuern des Betriebs der Modellierungs- und Struktur-Erzeugungs-Module und der synthetischen Daten-Erzeugungs-Module, worin die XDRs auf verschiedenen Aufzeichnungstypen von Echtdaten basieren, die von einer entsprechenden Datenquelle (11) abgerufen wurden, worin das System weiter umfasst:
c) ein Datenspeicher-Kommunikationsmodul (15) zur Vermittlung zwischen den XDR-Agenten (14) und dem XDR-Kernmodul (13) unter Verwendung einer Daten-Transformation, worin jede der mehreren XDR-Agenten (14) eingesetzt wird, eine Daten-Struktur der Echtdaten zu identifzieren, die von der entsprechende Datenquelle (11) zugänglich ist, die Echtdaten von einer bestimmten der zugänglichen Datenquellen zu erheben, und um die Daten-Struktur der erhobenen Daten in Kombination mit dem Datenspeicher-Kommunikationsmodul (15) in eine einheitliche Eingabe-Struktur zu transformieren, die mit den von dem einen oder den mehreren verwendeten Modellierungs- und Struktur-Erzeugungs-Module (13a) verwendeten Algorithmen kompatibel ist.

2. System nach Anspruch 1, bei dem die Modellierungs- und Struktur-Erzeugungs-Module (13a) Modellierungs- und Struktur-Erzeugungs-Algorithmen (MPCs) verwenden, die Strukturen auffinden können, welche Verhältnisse, Bedingungen und Konstanten der verfügbaren Daten wiedergeben.

3. System nach Anspruch 2, bei dem die Modellierungs-Aufgabe umfasst:
Erlernen von Zustandsübergängen eines Systems oder eines Individuums;
Erlernen von wahrscheinlichen Ursache-Wirkungs-Bedingungen in einem bestimmten Satz von Zufallsvariablen; und
Kontext-bezogenes Lernen.

4. System nach Anspruch 2, bei dem die synthetischen Daten-Erzeugungs Module (13b) syntaktische Daten-Erzeugungs (SDP) Algorithmen verwenden, um die XDRs als neue und unter Verwendung der von den MPCs erlernten Modelle erstellten Datenproben zu erzeugen.

5. System nach Anspruch 1, welches weiter eine XDR-Suchmaschine zum Empfangen von Datenerzeugungs-Abfragen, Verarbeiten der Abfragen, und Rückführen der verarbeiteten Abfragen an einen Klienten umfasst, worin die XDR-Suchmaschine umfasst:
i. eine Abfrage-API (16); und
ii. einen Abfrage-Prozessor (17) zum Empfangen und Verarbeiten von Daten-erzeugungs-Abfragen.

6. System nach Anspruch 5, welches weiter einen Agenten (20) zum Umwandeln und Zusammenfassen von Aufgaben umfasst, die an den Datensätzen mit erzeugter Struktur durchgeführt wurden, um den Abfragen zu entsprechen.

7. System nach Anspruch 5, welches weiter einen Abfrage-Cache (18) zum Zwischenspeichern der Abfragen und Suchergebnisse umfasst.

8. System nach Anspruch 1, welches weiter eine Nutzer-Schnittstelle (19) umfasst, um eine Interaktion mit dem XDR-Kernmodul (13) und Komponenten des Servers zu ermöglichen.

9. System nach Anspruch 1, bei dem die Datenquellen (11) lokal auf einem Computergerät vorgesehen sind, auf dem das Daten-Erzeugungs-System (10) läuft, oder auf einem externen Computergerät.

10. System nach Anspruch 1, bei dem das Daten-Aufteilungs-Modul (13c) die Daten in einen Trainings- und Test-Satz mittels Zufalls- oder Zeit-abhängiger Aufteilung teilt.

11. System nach Anspruch 1, bei dem die XDRs auf verschiedenen Typen von Echt-Kontext-bezogener Datensätze basieren, ausgewählt aus der Gruppe aus einem Anrufdaten-Protokoll (CDR), Daten bezüglich der von einem Nutzer durchgeführten Vorgänge, Kaufaufzeichnungen von Nutzern zum Zeitpunkt des Einkaufs, Reiseaufzeichnungen, Soziale Webseiten betreffende Daten, Suchmaschinen betreffende Daten und Daten betreffend wearable Computing.

12. System nach Anspruch 5, bei dem die verarbeiteten Datenabfragen zur weiteren Verwendung zusammengefasst und erstellt werden.

## Revendications

1. Système (10) destiné à générer des enregistrements de données de motifs fabriquées, ci-après également appelés « enregistrements de données X » ou « XDR », sur la base de données qui proviennent de sources de données accessibles (11), comprenant :
a) une pluralité d'agents d'enregistrement XDR (14) lesquels correspondent à des composants logiciels aptes à collecter les données provenant des sources de données (11), dans lequel un agent d'enregistrement XDR spécifique (14) est mis en œuvre pour chaque source de données parmi lesdites sources de données (11) ; et
b) un module de base d'enregistrement XDR (13) exécuté par un serveur contenant :
- un ou plusieurs modules de modélisation et de création de motifs (13a), qui incluent chacun des algorithmes pour modéliser les données collectées par ladite pluralité d'agents d'enregistrement XDR et pour créer des motifs en conséquence ;
- un ou plusieurs modules de génération de données synthétiques (13b) qui incluent chacun des algorithmes pour générer les enregistrements de données de motifs fabriquées, ou XDR, sur la base des motifs créés par lesdits modules de modélisation et de création de motifs ;
- un module de séparation de données (13c) pour séparer les données collectées en des ensembles d'apprentissage et de test selon une politique prédéterminée ;
- une base de données de stockage d'enregistrements XDR (13d) pour stocker les motifs créés et les enregistrements de données de motifs fabriquées, ou XDR ; et
- un gestionnaire de configuration (13e) pour commander le fonctionnement desdits modules de modélisation et de création de motifs et desdits modules de génération de données synthétiques ;
dans lequel lesdits enregistrements XDR sont basés sur divers types d'enregistrements de données réelles accessibles à partir d'une source de données correspondante (11), ledit système comprenant en outre :
c) un module de communication de magasin de données (15) destiné à servir d'intermédiaire entre lesdits agents d'enregistrement XDR (14) et ledit module de base d'enregistrement XDR (13) en utilisant une transformation de données ;
dans lequel chaque agent de ladite pluralité d'agents d'enregistrement XDR (14) est mis en œuvre de manière à identifier une structure de données desdites données réelles, laquelle est accessible à partir de la source de données correspondante (11), à collecter lesdites données réelles à partir d'une source de données spécifique parmi lesdites sources de données accessibles, et à transformer la structure de données desdites données collectées, en combinaison avec ledit module de communication de magasin de données (15), en une structure d'entrée unifiée qui est compatible avec les algorithmes utilisés par ledit un ou lesdits plusieurs modules de modélisation et de création de motifs (13a).

2. Système selon la revendication 1, dans lequel les modules de modélisation et de création de motifs (13a) utilisent des algorithmes de création de modèles et de motifs (MPC) qui sont en mesure de découvrir des motifs qui reflètent des relations, des conditions et des constantes de données disponibles.

3. Système selon la revendication 2, dans lequel des tâches de modélisation incluent :
- un apprentissage de transitions d'état d'un système ou d'un individu ;
- un apprentissage de conditions probabilistes de cause à effet parmi un ensemble donné de variables aléatoires ; et
- un apprentissage sensible au contexte.

4. Système selon la revendication 2, dans lequel les modules de génération de données synthétiques (13b) utilisent des algorithmes de production de données syntaxiques (SDP) en vue de générer les enregistrements XDR en tant que des échantillons de données nouvelles et fabriquées, en utilisant les modèles appris par les algorithmes de création MPC.

5. Système selon la revendication 1, comprenant en outre un moteur de requête d'enregistrement XDR destiné à recevoir des requêtes de génération de données, à traiter les requêtes, et à renvoyer lesdites requêtes traitées à un dispositif client, ledit moteur de requête d'enregistrement XDR comprenant :
i. une interface de programmation d'application, API, de requêtes (16) ; et
ii. un processeur de requêtes (17) destiné à recevoir et à traiter des requêtes de génération de données.

6. Système selon la revendication 5, comprenant en outre un agent (20) destiné à convertir et à agréger des tâches mises en œuvre sur les enregistrements de données de motifs fabriquées en vue d'être en conformité avec lesdites requêtes.

7. Système selon la revendication 5, comprenant en outre une mémoire cache de requêtes (18) destinée à mettre en cache des requêtes et des résultats de requêtes.

8. Système selon la revendication 1, comprenant en outre une interface utilisateur (19) destinée à permettre une interaction avec le module de base d'enregistrement XDR (13) et des composants côté serveur.

9. Système selon la revendication 1, dans lequel les sources de données (11) sont situées localement, sur un dispositif informatisé qui exécute le système de fabrication de données (10), ou sur un dispositif informatisé externe.

10. Système selon la revendication 1, dans lequel le module de séparation de données (13c) sépare les données en des ensembles d'apprentissage et de test en utilisant une séparation basée sur le hasard ou une séparation basée sur le temps.

11. Système selon la revendication 1, dans lequel les enregistrements XDR sont basés sur divers types d'enregistrements de données réelles connexes au contexte sélectionnés à partir du groupe d'enregistrements de données d'appel (CDR), de données concernant des opérations mises en œuvre par un utilisateur, d'enregistrements d'achat d'utilisateurs au niveau de points de vente, d'enregistrements de déplacement, de données connexes à des sites web sociaux, de données connexes à des moteurs de recherche, et de données connexes à l'informatique vestimentaire.

12. Système selon la revendication 5, dans lequel les requêtes de données traitées sont agrégées et préparées à des fins d'usage ultérieur.
